# EUROPEAN PATENT SPECIFICATION

(11) **EP 2 757 444 B1**
(45) Date of publication and mention of the grant of the patent: **19.04.2017**
(21) Application number: 11872370.9
(22) Date of filing: 13.09.2011
(51) Int. Cl.: H04W 4/00, G06F 3/044, G06F 3/041, H04B 5/00

(54) **VISUAL INTERFACE SYSTEM**
VISUELLES SCHNITTSTELLENSYSTEM
SYSTÈME D'INTERFACE VISUELLE

(43) Date of publication of application: 23.07.2014
(73) Proprietor: Slim HMI Technology, Taipei City 105 (TW)
(72) Inventor: Tsai Hsiung-kuang, Taipei City, Taiwan 115 (TW)
(74) Representative: Zimmermann, Tankred Klaus
(86) International application number: PCT/CN2011/079576
(87) International publication number: WO 2013/037103

(56) References cited:
- EP-A2- 0 483 709
- EP-A2- 0 483 709
- WO-A1-2010/136932
- CN-A- 1 904 812
- CN-A- 101 017 419
- CN-A- 101 120 527
- US-A1- 2005 206 603
- US-A1- 2010 085 325
- US-A1- 2011 193 798

## Description

### BACKGROUND OF THE INVENTION

### Field of Invention

The present invention relates to a human-machine interface system and, in particular, to a visual interface system.

### Related Art

Recently, touch panels have been widely applied to the commercial electronic products such as mobile phones, digital cameras, MP3, PDA, GPS, tablet PC, UMPC, and the likes. In these electronic products, the touch panel is bound with a screen to form a touch input display apparatus. A manufacturing method of a conventional touch input display apparatus is to dispose a touch panel on a display panel of a display module. However, due to the additional touch panel, this approach not only increases the weight and sized of the product, but also the cost.

In order to broaden the applications of the commercial electronic products, some products have been added with the new function of near field communication (NFC), which can be used to replace the conventional IC card (e.g. door card, credit card, ticket, and etc.), exchange information (e.g. music, image, name card, and etc.) between two electronic devices, or the likes. Accordingly, it is desired to create a product with a simple structure and more functions.

Therefore, it is an important subject to provide a visual interface system which can achieve the desired touch input function without configuring an additional touch panel, thereby making the product lighter and thinner, lowering the production cost, and providing the NFC function for broadening the application field.

US 2011/193798 A1 describes a touch sensing apparatus which includes: a sense unit connected to a sense scan line and a sense line; a location detection unit that detects a location of a touch from a sense signal transmitted from the sense unit through the sense line; and a determination and trigger unit that determines whether a touch is sensed from the sense signal, generates a trigger signal that instructs whether or not to operate the location detection unit, and transmits the trigger signal to the location detection unit. The determination and trigger unit includes a logic operation circuit that generates a trigger signal for operation of the location detection unit when the sense signal implies that a touch is sensed while a sense driving signal is applied to at least one of a plurality of sense scan lines. The location detection unit is operated at a minimum to minimize power consumption.

US 2010/085325 A1 describes a combination touch and transducer input system, which facilitates user input into an electronic system with a finger and/or a transducer (e.g., a stylus). The system includes a transducer configured to generate an electric field, and a sensor including an array of electrodes and a controller. The transducer is configured to transmit digital data, such as pen pressure data and switch status data, to the sensor. For example, the transducer comprises electronic circuitry configured to encode the digital data in a signal for transmission to the sensor. The sensor controller is configured to operate both in a touch sensing mode and in a transducer sensing mode. During the touch sensing mode, the controller determines a position of a proximate object (e.g., a finger) by capacitively sensing the object with the array of electrodes.; During the transducer sensing mode, the controller determines a position of the transducer based on a signal received by the array of electrodes from the transducer, and also receives and decodes the digital data encoded in the received signal. Digital data can be encoded in a signal using any suitable digital modulation techniques, such as a Frequency-Shift Keying (FSK) technique.

WO 2010/136932 A1 describes a device comprising a touch- or proximity-sensitive interface, the interface comprising a sensor electrode arrangement configured to receive one or more body-coupled communication signals via a user part touching or approaching the interface, and a detector configured to detect a position of the user part based on the one or more body- coupled communication signals. Embodiments provide an interactive surface which comprises a sensor electrode arrangement for detecting a position of a finger or other part touching, or approaching, the interactive surface. Body-coupled communication signals received by means of the sense electrode arrangement are evaluated for increasing the sensitivity of position detection.

### SUMMARY OF THE INVENTION

An objective of the present invention is to provide a visual interface system that can achieve the touch input function without configuring an additional touch panel, and is equipped with a near field communication (NFC) function.

This object is achieved by a visual interface system according to claim 1. Further embodiments of the invention are specified in the appended dependent claims.

### BRIEF DESCRIPTION OF THE DRAWINGS

The invention will become more fully understood from the detailed description and accompanying drawings, which are given for illustration only, and thus are not limitative of the present invention, and wherein:
FIG. 1 is a block diagram of a visual interface system according to a first embodiment of the invention;
FIG. 2 is a side view of a matrix display apparatus according to the first embodiment of the invention;
FIG. 3 is a schematic diagram showing a TFT substrate used in the first embodiment of the invention;
FIG. 4 is a schematic diagram showing the signals for two row electrodes and two column electrodes of the TFT substrate of FIG. 3;
FIG. 5 is a timing chart of the encoded signal transmitted through each column electrode according to the first embodiment of the invention;
FIG. 6 is a perspective view of the matrix display apparatus of the visual interface system according to the first embodiment of the invention;
FIG. 7 is a schematic diagram showing the matrix display apparatus and a user, as the operation apparatus, of the visual interface system according to the first embodiment of the invention; and
FIG. 8 is a block diagram of a visual interface system according to a second embodiment of the invention.

### DETAILED DESCRIPTION OF THE INVENTION

The present invention will be apparent from the following detailed description, which proceeds with reference to the accompanying drawings, wherein the same references relate to the same elements.

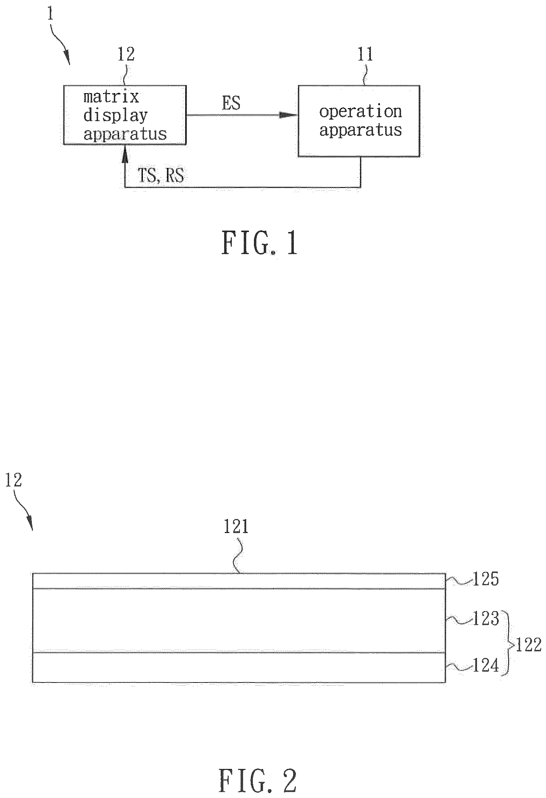

FIG. 1 is a block diagram of a visual interface system 1 according to a first embodiment of the invention. The visual interface system 1 includes an operation apparatus 11 and a matrix display apparatus 12, which are coupled with each other. For example, the operation apparatus 11 is capacitive coupled to the matrix display apparatus 12 for transmitting signals, which is a non-contact signal transmission.

In this embodiment, the operation apparatus 11 is, for example, a stylus, an IC card, an NFC reading apparatus, or a user (especially the hand of a user). When the operation apparatus 11 is an electronic apparatus, it may include some functional circuits such as a process control circuit, a storage circuit or a transmission circuit. Herein, any circuit can be composed of hardware, software or firmware, or their combinations. When the operation apparatus 11 is a user, the user (operation apparatus) can serve as a conductor for transmitting signals.

FIG. 2 is a side view of the matrix display apparatus 12. As shown in FIG. 2, the matrix display apparatus 12 includes a display surface 121 and a matrix substrate 122. The matrix substrate 122 includes a substrate 123 and a matrix 124. The matrix 124 is disposed at one side of the substrate 123, while the display surface 121 is located at the other side of the substrate 123. In this embodiment, the display surface 121 is the surface of the matrix display apparatus 12, which is closest to the viewer when the viewer is watching the images displayed on the matrix display apparatus 12. Besides, the matrix display apparatus 12 may further include a protect glass 125 disposed on one side of the substrate 123 opposite to the matrix 124. In this case, the display surface 121 is the surface of the protect glass closest to the viewer. Moreover, one side of the substrate 123 close to the protect glass 125 may be further configured with other components such as a polarizer, frame, or the likes.

In this embodiment, the matrix substrate 122 is a substrate configured with pixel matrix for displaying images, such as the TFT substrate of LCD panel, OLED panel, LED panel, electrophoretic panel, MEMS display panel, and the likes. The matrix 124 includes a plurality of row electrodes, a plurality of column electrodes, and a plurality of pixel electrodes, wherein the row electrodes and the column electrodes are intersected. Moreover, the matrix 124 can be an active matrix or a passive matrix. In this embodiment, the matrix 124 is an active matrix for example. Besides, the matrix 124 may further include a plurality of transistors electrically connected with the row electrodes, the column electrodes and the pixel electrodes, respectively.

The implementation of the embodiment used in the touch input purpose will be described hereinafter. Referring to FIGS. 1 and 2, when the operation apparatus 11 is operated on the display surface 121, an encoded signal ES is coupled to the operation apparatus 11 from the matrix substrate 122, and the operation apparatus 11 receives the encoded signal ES so as to generate a transmission signal TS. Herein, the encoded signal ES contains the coordinates of the display screen of the matrix display apparatus 12, and the transmission signal TS contains the coordinate information. When the encoded signal ES is transmitted from the matrix substrate 122 to the operation apparatus 11, they are wirelessly coupled so as to form a near field signal transmission. Of course, in other applications, the encoded signal can be composed of any information to be transmitted such as touch input information, instruction information, identification information, transaction information, or file information (e.g. music, images, texts, and etc.), so that the transmission signal TS contains the corresponding information.

The encoded signal ES is applied to the matrix substrate 122, and additional display data signal is applied to the matrix substrate 122 for displaying images. The encoded signal ES is applied during the blanking time of the display data signals. For example, the encoded signal ES can be applied between two frames or scan operations of two row electrodes, or during the gap generated as shortening the input time of the display signals. Or, the encoded signal ES can have a higher frequency and be directly added to the display signal.

The encoded signal ES and the transmission signal TS will be further described hereinbelow, wherein the matrix substrate 122 is a TFT substrate of an LCD apparatus.

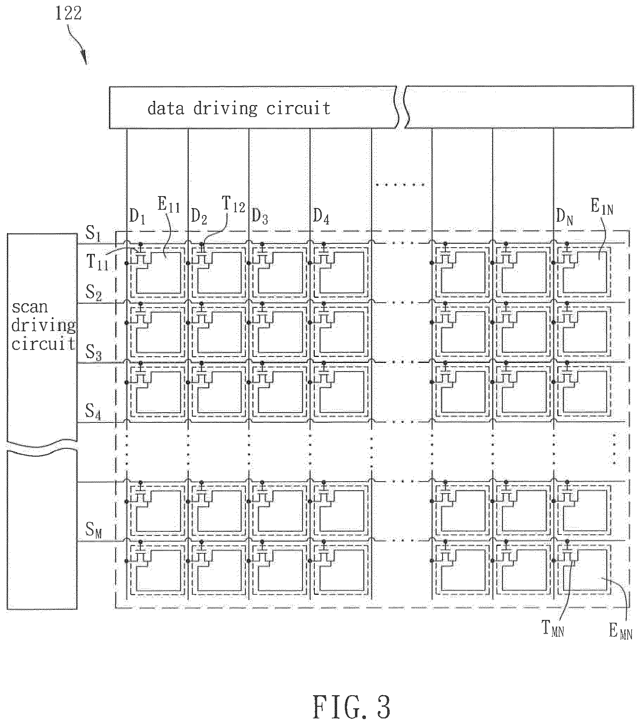

FIG. 3 is a schematic diagram showing a TFT substrate used in this embodiment. Referring to FIGS. 2 and 3, the matrix 124 includes a plurality of row electrodes S₁~S_{M}, a plurality of column electrodes D₁∼D_{N}, and a plurality of pixel electrodes E₁₁∼E_{MN}. The row electrodes and the column electrodes are intersected and they are substantially perpendicular to each other or have an included angle. Moreover, the matrix 124 further includes a plurality of transistors for electrically connected with the row electrodes S₁∼S_{M}, column electrodes D₁∼D_{N}, and pixel electrodes E₁₁∼E_{MN}. The row electrodes S₁~S_{M} are referred to scan lines, while the column electrodes D₁∼D_{N} are referred to data lines. Besides, the substrate 123 may further be configured with a driving module, which includes data driving circuit, scan driving circuit, timing control circuit (not shown), and gamma calibration circuit (not shown), for driving the LCD panel to display images. Since the function of the driving module is well known in this art, the detailed description thereof will be omitted here. To be noted, the above-mentioned matrix substrate is for illustrations only and is not to limit the invention. The point of this embodiment is that the encoded signal is transmitted from the matrix substrate to the operation apparatus through the row electrodes S₁∼S_{M} and/or the column electrodes D₁∼D_{N} so as to generate the transmission signal. The encoded signal may contain various information for different applications such as the reference coordinates of the display screen, the file information of different formats (e.g. personal data, music, images, and etc.), and the likes.

In this embodiment, the column electrodes D₁∼D_{N} can transmit not only the data signals for displaying images but also the encoded signal. For example, the display signal can be directly added to the encoded signal with higher frequency or be added to the blank period of the displayed data signal such as the period after the scan procedure of all row electrodes S₁∼S_{M} are finished and before the next scan procedure start (the blank period between frames). Or, the display signal can be inserted after one row electrode is scanned and before the scan of next row electrode, or within the scan period of row electrode by reducing the display data signal period and before sending the display data. Herein, the encoded signal can be provided by expending T-con circuit function and data or scan driving circuit, thereby simplifying the circuit design.

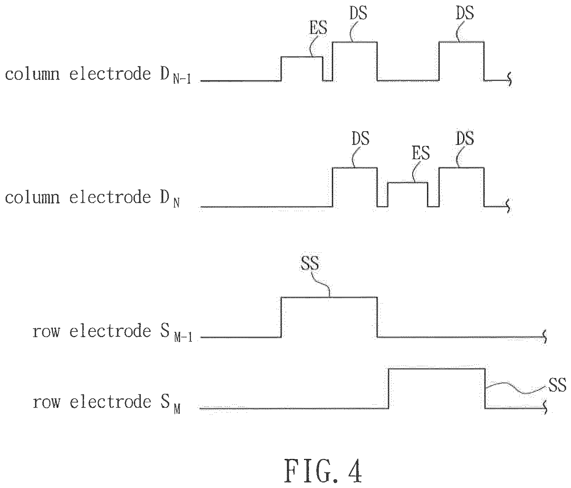

FIG. 4 is a schematic diagram showing the signals for two adjacent row electrodes and two adjacent column electrodes. The row electrodes S₁∼S_{M} transmit the scan signals SS, respectively, for sequentially turning on the transistors of each column. During the period that the transistors of each column are turned on, each of the column electrodes D₁∼D_{N} respectively transmits the corresponding encoded signal ES and the displayed data signal DS. The encoded signal ES will be described hereinafter by taking one dimension touch input perpendicular to the row electrode and sequentially encoded in time as an example. Of course, this method can also be applied to another dimension touch input perpendicular to the column electrode. Consequently, a complete two-dimensional touch input can be built. In this embodiment, as shown in FIG. 4, only one column electrode transmits the encoded signal ES when one row electrode transmits the scan signal. In this figure, the encoded signal ES is labeled with a level different from that of the displayed data signal DS; or, in practice, the encoded signal ES and the displayed data signal DS may have the same level.

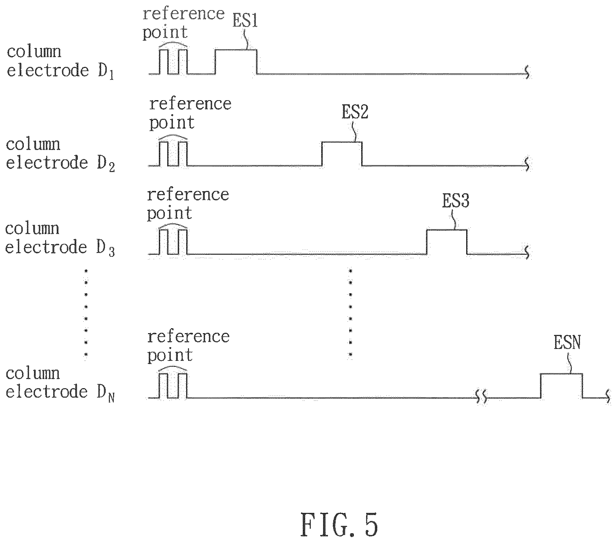

FIG. 5 is a timing chart of the encoded signal transmitted through each column electrode, wherein the data signals for display are omitted. When the row electrodes transmit the scan signals, the column electrodes D₁∼D_{N} transmit the encoded signals ES1∼ESN, respectively. To be noted, the encoded signals can be transmitted through different column electrodes, respectively, or multiple column electrodes may transmit the same encoded signal. For example, the column electrodes D₁∼D₃ transmit the encoded signal ES1. This approach may also be applied to the transmission of encoded signals through the row electrodes. Alternatively, the encoded signals transmitted through the row electrodes and the column electrodes may be independent. Since the column electrodes transmit the encoded signals ES, respectively, it is necessary to provide a time reference point for determining the positions of the column electrodes by comparing with the reference point. This reference point can be a specific code and transmitted by the same manner. For example, all column electrodes may output the code "1" twice and then transmit the sequential signal. As mentioned above, if the encoded signal coupled to the operation apparatus is "110010000", it represents that the operation apparatus is located on the third column electrode, thereby figuring out the coordinate (x-coordinate) of the operation apparatus. Similarly, the y-coordinate of the operation apparatus can be estimated according to another encoded signal applied to the row electrode. Since the scan signals from the row electrodes for driving the display signal are sequentially generated, they can also be used as the encoded signals of the row electrodes. The encoded signals of the row electrodes and the column electrodes may have a common reference point such as the horizontal or vertical sync signals for displaying images. Of course, the column electrodes D₁∼D_{N} and the row electrodes S₁∼S_{M} may have more complicated encoded signals, which will not be described in detail here.

The duty cycle of the encoded signal of this embodiment is smaller than that of the data signals so as to maintain the display quality.

When a user grabs the operation apparatus 11 and operates it on the display surface 121 of the matrix display apparatus 12 (e.g. to contact or approach the display surface), the encoded signal is capacitive coupled from the matrix substrate 122 to the operation apparatus 11. This embodiment takes the column electrodes D₁∼D_{N} for transmitting the encoded signals ES for an example, so the column electrode can serve as one of the capacitive coupling electrodes, and the operation apparatus 11 has the other capacitive coupling electrode. For example, when the operation apparatus 11 is a stylus, a conductor configured at the tip of the stylus functions as the other capacitive coupling electrode.

After receiving the encoded signal ES through the capacitive coupling, the operation apparatus 11 processes the received encoded signal ES to generate a transmission signal TS. This process includes amplifying and/or decoding the encoded signal ES so as to determine the touch position, the touch gesture (writing style), the corresponding function instruction, or which column electrode is touched or pressed. To be noted, the encoded signal ES is capacitive coupled to the operation apparatus 11, and the value of the capacitance relies upon the distance between the operation apparatus and the display surface, which means the amplitude of the signal can provide the z-axis information, so that the operation apparatus 11 can get not only the two-dimensional coordinates but also the z coordinate. Accordingly, the transmission signal TS stands for the result of processing the encoded signal ES, ranging from simple amplification to extract the information like commands of action.

After generating the transmission signal TS, the operation apparatus 11 can transmit the transmission signal TS to the matrix display apparatus 12, other relay apparatus, or other apparatuses outside the visual interface system through wire/wireless electrical coupling (including capacitive coupling) or optical coupling. In this embodiment, the transmission signal TS is directly transmitted to the matrix display apparatus 12.

When this invention is applied to other non-touch input applications, the information to be transmitted is encoded to generate an encoded signal ES based on a specific coding rule, and then the encoded signal ES is capacitive coupled from the matrix substrate 122 (e.g. configured as a cell phone or tablet computer) to the operation apparatus 11 (e.g. short distance wireless reading apparatus attached on the wall). Similarly, the operation apparatus 11 can process (decodes or modifies) the encoded signal ES based on the preset coding rule so as to obtain the transmission signal TS, and then uses the transmission signal TS on the corresponding application such as access control, payment, financial transaction, file transmission, and the likes.

In the above, the operation apparatus 11 processes the encoded signal ES to obtain the information contained in the transmission signal TS such as the touch input information, instruction information, identification information, transaction information, file information or other information. In other embodiments, the matrix display apparatus 12 may process the transmission signal TS to obtain an information signal, which contains the touch input information, instruction information, identification information, transaction information, file information or other information. In this case, the information signal, instead of the transmission signal TS, carries the complete information.

As mentioned above, referring to FIG. 1, in the procedures of coupling the encoded signal ES to the operation apparatus 11 to generate the transmission signal TS and transmitting the transmission signal TS to the matrix display apparatus 12 to obtain the information signal, the signal is processed by, for example, amplification and decoding, which can be handled by either one of the operation apparatus 11 and the matrix display apparatus 12 or among these units. Accordingly, the resulting transmission signal TS or the information signal can contain the touch input information, instruction information, identification information, transaction information, file information or other information.

Besides, a response signal RS can also be transmitted between the operation apparatus 11 and the matrix display apparatus 12. Herein, the response signal RS is for providing the information of the receiving status of the operation apparatus 11 to the matrix display apparatus 12, announcing the operation apparatus 11 to get ready for receiving the signal, or synchronizing the operation apparatus 11 and the matrix display apparatus 12. This configuration can create an interactive mechanism between the transmitting and receiving signals. Moreover, the response signal RS can provide the synchronization function for establishing an information handshaking procedure between the operation apparatus 11 and the matrix display apparatus 12.

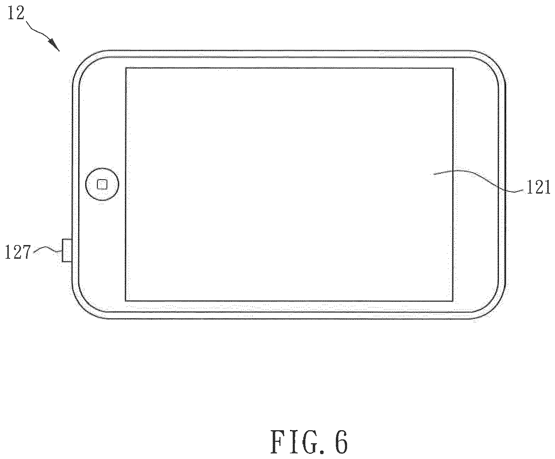

FIG. 6 is a schematic drawing of the matrix display apparatus 12 of the visual interface system according to the first embodiment of the invention. Referring to FIG. 6, the visual interface system further includes a mode trigger apparatus 127. When a user or the operation apparatus triggers the mode trigger apparatus 127, the mode trigger apparatus 127 can enable the matrix display apparatus 12 into an operating mode to output the encoded signal ES. For example, when the user needs the touch input function, he/she activates the mode trigger apparatus 127 so as to enable the matrix display apparatus 12 into the touch input mode. Then, the row electrode or column electrode starts to transmit the encoded signal. Otherwise, the matrix display apparatus 12 does not enter the touch input mode and the touch input function of the matrix display apparatus 12 may be partially or totally shut down. This function can save power and prevent the abnormal operation caused by unintentionally contacting the screen. To be noted, the operation of the mode trigger apparatus 127 may have different operation modes. For example, after being activated, the mode trigger apparatus 127 may remain in the new state for a while and then return to the original state, or it may change the state while been activated each time, or it remains in the new state only when the activation lasts. The mode trigger apparatus 127 can be configured on the operation apparatus (e.g. a switch on the stylus) as well. In this case, when the mode trigger apparatus 127 is activated, the operation apparatus 11 transmits a trigger signal to the matrix display apparatus 12 to control it to enter the touch input mode. To be noted, it is possible to switch to touch input function when the mode trigger apparatus 127 is activated once by the user or requests the user to keep activating the mode trigger apparatus 127 to maintain in touch input function. Taking the access card, ticket, credit card or file transmission as examples, the user can trigger the mode trigger apparatus to transmit the encoded signal for authorization or personal identification to the corresponding data receiving device. The mode trigger apparatus 127 can be, for example, a mechanical switch, a touch sensing switch, or the likes.

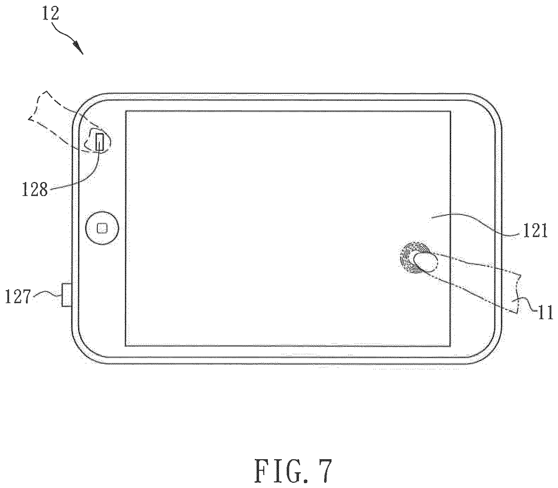

FIG. 7 is a schematic diagram showing the matrix display apparatus 12 and a user, as the operation apparatus 11, of the visual interface system 1 according to the first embodiment of the invention. In this aspect, the visual interface system 1 further includes a sensing apparatus 128, which is electrically coupled with the matrix display apparatus 12. When the user touches or approaches the display surface 121 and the sensing apparatus 128 of the matrix display apparatus 12 simultaneously, the transmission signal TS is transmitted to the matrix display apparatus 12. The user serves as a large conductor for transmitting the transmission signal TS to the matrix display apparatus 12. In practice, the user can use his/her right hand to operate on the display surface 121, while use the left hand to press the sensing apparatus 128. Accordingly, the encoded signal ES can enter the user body through the right hand, and the transmission signal TS can be outputted from the left hand. The sensing apparatus 128 may also contain the function of the mode trigger apparatus 127. For example, only when the sensing apparatus 128 is pressed by hand, the operation mode will be enabled. This specific function can sufficiently reduce the power consumption and problem of unintentional touch.

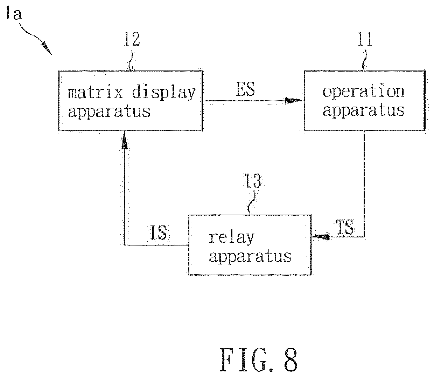

FIG. 8 is a block diagram of a visual interface system 1a according to a second embodiment of the invention. The visual interface system 1a includes an operation apparatus 11 and a matrix display apparatus 12. Different from the first embodiment, the visual interface system 1a further includes at least one relay apparatus 13, and the transmission signal TS is transmitted to the matrix display apparatus 12 or other apparatuses outside the visual interface system through the relay apparatus 13. Transmitting the transmission signal TS through user's hand to a relay apparatus 13 will be used to describe the implementation of this embodiment. From the transmission signal TS, the relay apparatus 13 generates a relay processed signal IS and transmits back to the matrix display apparatus 12. The relay apparatus 13 is only for illustration and it is possible to configure multiple relay apparatuses. When the operation apparatus 11 is a user, the user can transmit the transmission signal TS to the relay apparatus 13 instead of transmitting back to the matrix display apparatus 12. Herein, the relay apparatus 13 can be a portable communication device such as a cell phone. Accordingly, the user can be the transmission media for conducting the encoded signal ES outputted from the matrix display apparatus 12 to the relay apparatus 13 for the purpose of transmitting file information.

The relay apparatus 13 can process the transmission signal TS to generate a relay processed signal IS and then transmit the relay processed signal IS to the matrix display apparatus 12. In the procedures of coupling the encoded signal ES to the operation apparatus 11 to generate the transmission signal TS, processing the transmission signal TS by the relay apparatus 13 to generate the relay processed signal IS, and transmitting the relay processed signal IS to the matrix display apparatus 12 to obtain the information signal, the signal is processed by means, for example, amplification, decoding, modifying and/or interpretation, which can be implemented by all or either one of the operation apparatus 11, the matrix display apparatus 12 and the relay apparatus 13. Accordingly, the transmission signal TS, the relay processed signal IS or the information signal can contain the touch input information, instruction information, identification information, transaction information, file information or other information.

Besides, the response signal RS of the first embodiment can also be applied to the operation apparatus, relay apparatus and/or matrix display apparatus of the second embodiment, thereby creating an interactive mechanism between the transmitting and receiving signals. Moreover, the response signal RS can provide the synchronization function for establishing an information handshaking procedure between the operation apparatus, relay apparatus and matrix display apparatus.

In the visual interface system of the invention, when the operation apparatus is operated on the display surface, the encoded signal is coupled to the operation apparatus from the matrix substrate, and the operation apparatus receives the encoded signal to generate a transmission signal. In touch input application, the transmission signal can be directly or indirectly transmitted to the matrix display apparatus. During this transmission procedure, the transmission signal can be processed by operation apparatus, at least one relay apparatus, and/or the matrix display apparatus, so that the matrix display apparatus can retrieve the information contained in the encoded signal and transmission signal, such as touch input information, instruction information, identification information, transaction information, file information or other information.

As mentioned above, the visual interface system of the invention can be directly applied to the system containing matrix structure such as TFT LCD panel, OLED panel, LED panel, electrophoretic display panel, MEMS display panel, or the likes, thereby integrating display, touch input and data transmission functions together. Thus, the products can be lighter and thinner and the product cost can be decreased, thereby improving the product competitiveness. Moreover, the encoded signal is coupled to the external operation apparatus instead of being directly read by the matrix substrate, so that it is unnecessary to modify the layout on the matrix substrate. For example, regarding to the touch input application, it is unnecessary to add the capacitance sensing component in the display panel for detecting the change of external capacitance values. As a result, the present invention can decrease the manufacturing cost and time.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the scope of the invention as claimed.

## Claims

1. A visual interface system, comprising:
an operation apparatus (11); and
a matrix display apparatus (12), comprising:
a display surface (121), said display surface (121) is the surface of the matrix display apparatus (12) closest to the viewer when the viewer is watching the images displayed on the matrix display apparatus (12), and
a matrix substrate (122) including a substrate (123) and a matrix (124), wherein the matrix (124) is arranged on one side of the substrate (123) while the display surface (121) is located at the other side of the substrate (123), the matrix (124) including a plurality of row electrodes (S₁∼S_{M}), a plurality of column electrodes (D₁∼D_{N}), and a plurality of pixel electrodes (E₁₁∼E_{MN}) electrically connected to said plurality of row electrodes (S₁∼S_{M}) and said plurality of column electrodes (D₁∼D_{N}), and the row electrodes (S₁∼S_{M}) and the column electrodes (D₁∼D_{N}) being intersected;
said visual interface system being **characterized in that**, when the operation apparatus (11) is operated on the display surface (121), a displayed data signal (DS) is sent to the column electrodes (D₁∼D_{N}) and an encoded signal (ES) is sent to at least one of the column electrode (D₁∼D_{N}) and the row electrode (S₁∼S_{M}), each of the column electrodes (D₁∼D_{N}) and the row electrodes (S₁∼S_{M}) adapted to couple and transmit a corresponding encoded signal (ES) to the operation apparatus (11) from the matrix substrate (122), and each of the column electrodes (D₁∼D_{N}) adapted to couple and transmit a corresponding displayed data signal (DS) to the operation apparatus (11) from the matrix substrate (122), and the operation apparatus (11) is adapted to receive the encoded signal (ES) so as to generate a transmission signal (TS) in response thereto.

2. The visual interface system of claim 1, wherein each of the column electrodes (D₁∼D_{N}) and the row electrodes (S₁∼S_{M}) is adapted to capacitive couple and transmit a corresponding encoded signal (ES) to the operation apparatus (11) from the matrix substrate (122).

3. The visual interface system of claim 1, wherein the transmission signal (TS) is transmitted to the matrix display apparatus (12).

4. The visual interface system of claim 1 or 3, wherein the transmission signal (TS) comprises touch input information, instruction information, identification information, transaction information, or file information.

5. The visual interface system of claim 3, wherein the matrix display apparatus (12) is adapted to process the transmission signal (TS) to obtain an information signal, and the information signal comprises touch input information, instruction information, identification information, transaction information, or file information.

6. The visual interface system of claim 1, further comprising:
at least a relay apparatus (13) for processing the transmission signal (TS) to generate a relay processed signal (IS).

7. The visual interface system of claim 6, wherein the relay processed signal (IS) is transmitted to the matrix display apparatus (12).

8. The visual interface system of claim 6, wherein the transmission signal (TS) comprises touch input information, instruction information, identification information, transaction information, file information or other information.

9. The visual interface system of claim 6, wherein the relay processed signal (IS) comprises touch input information, instruction information, identification information, transaction information, or file information.

10. The visual interface system of claim 7, wherein the matrix display apparatus (12) is adapted to process the relay processed signal (IS) to generate an information signal, and the information signal comprises touch input information, instruction information, identification information, transaction information, or file information.

11. The visual interface system of claim 1 or 6, further comprising:
a mode trigger apparatus (128) for enabling the matrix display apparatus (12) into an operating mode to output the encoded signal (ES) as the mode trigger apparatus (128) is triggered by a user or the operation apparatus (11).

12. The visual interface system of claim 1 or 6, wherein when the operation apparatus (11) is a user, the visual interface system further comprises a sensing apparatus (128), and then when the user touches the display surface (121) and the sensing apparatus (128) simultaneously, the transmission signal (TS) is transmitted to the sensing apparatus (128).

13. The visual interface system of claim 12, wherein the sensing apparatus (128) has a mode trigger function, so the sensing apparatus (128) enables the matrix display apparatus (12) to an operating mode to output the encoded signal (ES) as the user activates the sensing apparatus (128).

14. The visual interface system of claim 1, wherein the encoded signal (ES) is applied to the row electrodes (S₁∼S_{M}) and the column electrodes (D₁∼D_{N}).

15. The visual interface system of claim 14, wherein the matrix (124) further comprises a plurality of transistors, and the transistors are electrically connected with the row electrodes (S₁∼S_{M}), the column electrodes (D₁∼D_{N}) and the pixel electrodes (E₁₁∼E_{MN}).

16. The visual interface system of claim 1, wherein the encoded signal (ES) has a higher frequency and is directly added to the displayed data signal (DS).

17. The visual interface system of claim 1, wherein the encoded signal (ES) includes a time reference point to identify the electrode that transmits the encoded signal (ES).

## Patentansprüche

1. Ein Visuelle-Schnittstelle-System, das folgende Merkmale aufweist:
ein Arbeitsgerät (11); und
eine Matrixanzeigevorrichtung (12), die folgende Merkmale aufweist:
eine Anzeigeoberfläche (121), wobei die Anzeigeoberfläche (121) diejenige Oberfläche der Matrixanzeigevorrichtung (12) ist, die dem Betrachter am nächsten ist, wenn der Betrachter die auf der Matrixanzeigevorrichtung (12) angezeigten Bilder ansieht, und
ein Matrixsubstrat (122), das ein Substrat (123) und eine Matrix (124) umfasst, wobei die Matrix (124) auf einer Seite des Substrats (123) angeordnet ist, während sich die Anzeigeoberfläche (121) auf der anderen Seite des Substrats (123) befindet, wobei die Matrix (124) eine Mehrzahl von Zeilenelektroden (S₁∼S_{M}), eine Mehrzahl von Säulenelektroden (D₁∼D_{N}) und eine Mehrzahl von Pixelelektroden (E₁₁∼E_{MN}), die mit der Mehrzahl von Zeilenelektroden (S₁∼S_{M}) und der Mehrzahl von Säulenelektroden (D₁∼D_{N}) elektrisch verbunden sind, umfasst, und wobei sich die Zeilenelektroden (S₁∼S_{M}) und die Säulenelektroden (D₁∼D_{N}) schneiden;
wobei das Visuelle-Schnittstelle-System **dadurch gekennzeichnet ist, dass** dann, wenn das Arbeitsgerät (11) auf der Anzeigeoberfläche (121) verwendet wird, ein Angezeigte-Daten-Signal (DS) an die Säulenelektroden (D₁∼D_{N}) gesendet wird und ein codiertes Signal (ES) an zumindest eine der Säulenelektroden (D₁∼D_{N}) und der Zeilenelektroden (S₁∼S_{M}) gesendet wird, wobei jede der Säulenelektroden (D₁∼D_{N}) und der Zeilenelektroden (S₁∼S_{M}) dazu angepasst ist, ein entsprechendes codiertes Signal (ES) mit dem Arbeitsgerät (11) zu koppeln und von dem Matrixsubstrat (122) an dieselbe zu senden, und jede der Säulenelektroden (D₁∼D_{N}) dazu angepasst ist, ein entsprechendes Angezeigte-Daten-Signal (DS) mit dem Arbeitsgerät (11) zu koppeln und von dem Matrixsubstrat (122) an dieselbe zu senden, und wobei das Arbeitsgerät (11) dazu angepasst ist, das codierte Signal (ES) zu empfangen, um ansprechend darauf ein Übertragungssignal (TS) zu erzeugen.

2. Das Visuelle-Schnittstelle-System gemäß Anspruch 1, bei dem jede der Säulenelektroden (D₁∼D_{N}) und der Zeilenelektroden (S₁∼S_{M}) dazu angepasst ist, ein entsprechendes codiertes Signal (ES) mit dem Arbeitsgerät (11) zu koppeln und von dem Matrixsubstrat (122) an dieselbe zu senden.

3. Das Visuelle-Schnittstelle-System gemäß Anspruch 1, bei dem das Übertragungssignal (TS) an die Matrixanzeigevorrichtung (12) gesendet wird.

4. Das Visuelle-Schnittstelle-System gemäß Anspruch 1 oder 3, bei dem das Übertragungssignal (TS) Berührungseingabeinformationen, Anweisungsinformationen, Identifikationsinformationen, Transaktionsinformationen oder Dateiinformationen aufweist.

5. Das Visuelle-Schnittstelle-System gemäß Anspruch 3, bei dem die Matrixanzeigevorrichtung (12) dazu angepasst ist, das Übertragungssignal (TS) dahin gehend zu verarbeiten, ein Informationssignal zu erhalten, und das Informationssignal Berührungseingabeinformationen, Anweisungsinformationen, Identifikationsinformationen, Transaktionsinformationen oder Dateiinformationen aufweist.

6. Das Visuelle-Schnittstelle-System gemäß Anspruch 1, das ferner folgendes Merkmal aufweist:
zumindest eine Weiterleitungsvorrichtung (13) zum Verarbeiten des Übertragungssignals (TS), um ein weiterleitungsverarbeitetes Signal (IS) zu erzeugen.

7. Das Visuelle-Schnittstelle-System gemäß Anspruch 6, bei dem das weiterleitungsverarbeitete Signal (IS) an die Matrixanzeigevorrichtung (12) gesendet wird.

8. Das Visuelle-Schnittstelle-System gemäß Anspruch 6, bei dem das Übertragungssignal (TS) Berührungseingabeinformationen, Anweisungsinformationen, Identifikationsinformationen, Transaktionsinformationen, Dateiinformationen oder andere Informationen aufweist.

9. Das Visuelle-Schnittstelle-System gemäß Anspruch 6, bei dem das weiterleitungsverarbeitete Signal (IS) Berührungseingabeinformationen, Anweisungsinformationen, Identifikationsinformationen, Transaktionsinformationen oder Dateiinformationen aufweist.

10. Das Visuelle-Schnittstelle-System gemäß Anspruch 7, bei dem die Matrixanzeigevorrichtung (12) dazu angepasst ist, das weiterleitungsverarbeitete Signal (IS) dahin gehend zu verarbeiten, ein Informationssignal zu erzeugen, und das Informationssignal Berührungseingabeinformationen, Anweisungsinformationen, Identifikationsinformationen, Transaktionsinformationen oder Dateiinformationen aufweist.

11. Das Visuelle-Schnittstelle-System gemäß Anspruch 1 oder 6, das ferner folgendes Merkmal aufweist:
eine Modusauslösevorrichtung (128) zum Freischalten der Matrixanzeigevorrichtung (12) in einen Arbeitsmodus, um das codierte Signal (ES) auszugeben, während die Modusauslösevorrichtung (128) durch einen Nutzer oder das Arbeitsgerät (11) ausgelöst wird.

12. Das Visuelle-Schnittstelle-System gemäß Anspruch 1 oder 6, wobei dann, wenn das Arbeitsgerät (11) ein Nutzer ist, das Visuelle-Schnittstelle-System ferner eine Erfassungsvorrichtung (128) aufweist, und dann, wenn der Nutzer die Anzeigeoberfläche (121) und die Erfassungsvorrichtung (128) gleichzeitig berührt, das Übertragungssignal (TS) an die Erfassungsvorrichtung (128) gesendet wird.

13. Das Visuelle-Schnittstelle-System gemäß Anspruch 12, bei dem die Erfassungsvorrichtung (128) eine Modusauslösefunktion aufweist, so dass die Erfassungsvorrichtung (128) die Matrixanzeigevorrichtung (12) in einen Arbeitsmodus freischaltet, um das codierte Signal (ES) auszugeben, während der Nutzer die Erfassungsvorrichtung (128) aktiviert.

14. Das Visuelle-Schnittstelle-System gemäß Anspruch 1, bei dem das codierte Signal (ES) an die Zeilenelektroden (S₁~S_{M}) und die Säulenelektroden (D₁∼D_{N}) angelegt wird.

15. Das Visuelle-Schnittstelle-System gemäß Anspruch 14, bei dem die Matrix (124) ferner eine Mehrzahl von Transistoren aufweist und die Transistoren mit den Zeilenelektroden (S₁~S_{M}), den Säulenelektroden (D₁~D_{N}) und den Pixelelektroden (E₁₁∼E_{MN}) elektrisch verbunden sind.

16. Das Visuelle-Schnittstelle-System gemäß Anspruch 1, bei dem das codierte Signal (ES) eine höhere Frequenz aufweist und direkt zu dem Angezeigte-Daten-Signal (DS) hinzugefügt ist.

17. Das Visuelle-Schnittstelle-System gemäß Anspruch 1, bei dem das codierte Signal (ES) einen Zeitreferenzpunkt umfasst, um die Elektrode, die das codierte Signal (ES) sendet, zu identifizieren.

## Revendications

1. Système d'interface visuelle, comprenant:
un appareil de fonctionnement (11); et
un appareil d'affichage matriciel (12), comprenant:
une surface d'affichage (121), ladite surface d'affichage (121) étant la surface de l'appareil d'affichage matriciel (12) la plus proche du spectateur lorsque le spectateur regarde les images affichées sur l'appareil d'affichage matriciel (12), et
un substrat à matrice (122) comportant un substrat (123) et une matrice (124), où la matrice (124) est disposée d'un côté du substrat (123), tandis que la surface d'affichage (121) est située de l'autre côté du substrat (123), la matrice (124) comportant une pluralité d'électrodes en rangée (S₁~S_{M}), une pluralité d'électrodes en colonne (D₁∼D_{N}) et une pluralité d'électrodes de pixel (E₁₁∼E_{MN}) connectées électriquement à ladite pluralité d'électrodes en rangée (S₁~S_{M}) et ladite pluralité d'électrodes en colonne (D₁~D_{N}), et les électrodes en rangée (S₁~S_{M}) et les électrodes en colonne (D₁~D_{N}) se croisant;
ledit système d'interface visuelle étant **caractérisé par le fait que**, lorsque l'appareil de fonctionnement (11) est actionné sur la surface d'affichage (121), un signal de données affichées (DS) est envoyé aux électrodes en colonne (D₁~D_{N}) et un signal codé (ES) est envoyé au moins à l'une parmi les électrodes en colonne (D₁∼D_{N}) et les électrodes en rangée (S₁∼S_{M}), chacune des électrodes en colonne (D₁∼D_{N}) et des électrodes en rangée (S₁~S_{M}) étant adaptée pour coupler et transmettre un signal codé correspondant (ES) à l'appareil de fonctionnement (11) à partir du substrat à matrice (122), et chacune des électrodes en colonne (D₁∼D_{N}) étant adaptée pour coupler et transmettre un signal de données affichées (DS) correspondant à l'appareil de fonctionnement (11) à partir du substrat à matrice (122), et l'appareil de fonctionnement (11) est adapté pour recevoir le signal codé (ES) de manière à générer un signal de transmission (TS) en réponse à ce dernier.

2. Système d'interface visuelle selon la revendication 1, dans lequel chacune des électrodes en colonne (D₁∼D_{N}) et des électrodes en rangée (S₁~S_{M}) est adaptée pour coupler de manière capacitive et transmettre un signal codé correspondant (ES) à l'appareil de fonctionnement (11) à partir du substrat à matrice (122).

3. Système d'interface visuelle selon la revendication 1, dans lequel le signal de transmission (TS) est transmis à l'appareil d'affichage matriciel (12).

4. Système d'interface visuelle selon la revendication 1 ou 3, dans lequel le signal de transmission (TS) comprend une information d'entrée tactile, une information d'instruction, une information d'identification, une information de transaction ou une information de fichier.

5. Système d'interface visuelle selon la revendication 3, dans lequel l'appareil d'affichage matriciel (12) est adapté pour traiter le signal de transmission (TS) pour obtenir un signal d'information, et le signal d'information comprend une information d'entrée tactile, une information d'instruction, une information d'identification, une information de transaction ou une information de fichier.

6. Système d'interface visuelle selon la revendication 1, comprenant par ailleurs:
au moins un appareil de relais (13) destiné à traiter le signal de transmission (TS) pour générer un signal traité de relais (IS).

7. Système d'interface visuelle selon la revendication 6, dans lequel le signal traité de relais (IS) est transmis à l'appareil d'affichage matriciel (12).

8. Système d'interface visuelle selon la revendication 6, dans lequel le signal de transmission (TS) comprend une information d'entrée tactile, une information d'instruction, une information d'identification, une information de transaction, une information de fichier ou autre information.

9. Système d'interface visuelle selon la revendication 6, dans lequel le signal traité de relais (IS) comprend une information d'entrée tactile, une information d'instruction, une information d'identification, une information de transaction ou une information de fichier.

10. Système d'interface visuelle selon la revendication 7, dans lequel l'appareil d'affichage matriciel (12) est adapté pour traiter le signal traité de relais (IS) pour générer un signal d'information, et le signal d'information comprend une information d'entrée tactile, une information d'instruction, une information d'identification, une information de transaction ou une information de fichier.

11. Système d'interface visuelle selon la revendication 1 ou 6, comprenant par ailleurs:
un appareil de déclenchement de mode (128) destiné à permettre que l'appareil d'affichage matriciel (12) en mode de fonctionnement sorte le signal codé (ES) au fur et à mesure que l'appareil de déclenchement de mode (128) est déclenché par un utilisateur ou l'appareil de fonctionnement (11).

12. Système d'interface visuelle selon la revendication 1 ou 6, dans lequel, lorsque l'appareil de fonctionnement (11) est un utilisateur, le système d'interface visuelle comprend par ailleurs un appareil de détection (128), et lorsque l'utilisateur touche simultanément la surface d'affichage (121) et l'appareil de détection (128), le signal de transmission (TS) est transmis à l'appareil de détection (128).

13. Système d'interface visuelle selon la revendication 12, dans lequel l'appareil de détection (128) présente une fonction de déclenchement de mode, de sorte que l'appareil de détection (128) permette que l'appareil d'affichage matriciel (12) en mode de fonctionnement sorte le signal codé (ES) au fur et à mesure que l'utilisateur active l'appareil de détection (128).

14. Système d'interface visuelle selon la revendication 1, dans lequel le signal codé (ES) est appliqué aux électrodes en rangée (S₁~S_{M}) et aux électrodes en colonne (D₁∼D_{N}).

15. Système d'interface visuelle selon la revendication 14, dans lequel la matrice (124) comprend par ailleurs une pluralité de transistors, et les transistors sont connectés électriquement aux électrodes en rangée (S₁∼S_{M}), aux électrodes en colonne (D₁~D_{N}) et aux électrodes de pixel (E₁₁∼E_{MN}).

16. Système d'interface visuelle selon la revendication 1, dans lequel le signal codé (ES) a une fréquence supérieure et est directement ajouté au signal de données affichées (DS).

17. Système d'interface visuelle selon la revendication 1, dans lequel le signal codé (ES) comporte un point de référence de temps pour identifier l'électrode qui transmet le signal codé (ES).
